## Europäisches Patentamt
## European Patent Office
## Office européen des brevets

(19)

(11) Veröffentlichungsnummer: **0 166 336**
**B1**

(12) **EUROPÄISCHE PATENTSCHRIFT**

(45) Veröffentlichungstag der Patentschrift:
**16.08.89**

(21) Anmeldenummer: **85107422.9**

(22) Anmeldetag: **15.06.85**

(51) Int. Cl.⁴: **B 01 J 27/32**, B 01 J 37/26,
B 01 J 38/46

(54) Verfahren zur Wiederaufbereitung von Fluorierungskatalysatoren.

(30) Priorität: **27.06.84 DE 3423625**

(43) Veröffentlichungstag der Anmeldung:
**02.01.86 Patentblatt 86/1**

(45) Bekanntmachung des Hinweises auf die Patenterteilung:
**16.08.89 Patentblatt 89/33**

(84) Benannte Vertragsstaaten:
**BE CH DE FR GB IT LI NL**

(56) Entgegenhaltungen:
**DE-A- 2 702 360**
**DE-B- 1 767 200**
**US-A- 2 745 886**

(73) Patentinhaber: **HOECHST AKTIENGESELLSCHAFT,
Postfach 80 03 20, D-6230 Frankfurt am Main 80 (DE)**

(72) Erfinder: **Müller, Thomas, Dr., Alolfstrasse 17b,
D-6380 Bad Homburg (DE)**
Erfinder: **Siegemund, Günter, Dr., Frankfurter
Strasse 21, D-6238 Hofheim am Taunus (DE)**

ACTORUM AG

## Beschreibung

Die Erfindung betrifft ein Verfahren zur Wiederaufbereitung von verbrauchten Fluorierungskatalysatoren der Chromoxifluoridgruppe.

Fluorierungskatalysatoren aus der Gruppe der Chromoxifluoride, die man z.B. durch Fluorierung von Oxidhydraten des dreiwertigen Chroms, wie Chrom-III-hydroxid oder Chromoxidhydratgrün (Guignets Grün), mit Fluorwasserstoff oder durch Erhitzen von wasserhaltigem Chromtrifluorid in Gegenwart eines Sauerstoff enthaltenden Gases, wie z.B. Luft, erhält, sind zur Fluorierung chlorierter und/oder bromierter aliphatischer Kohlenwasserstoffe hervorragend geeignet. Die Katalysatoren haben jedoch die Neigung, in ihrer Aktivität nachzulassen, wenn sie längere Zeit mit halogenhaltigen Kohlenstoffverbindungen, insbesondere solchen, die auch Wasserstoff und/oder Sauerstoff enthalten, in Kontakt sind.

Es ist bereits bekannt, eine Desaktivierung von Chromoxifluoridkatalysatoren durch Behandlung mit Sauerstoff bei Temperaturen um 500 °C zu beseitigen; doch ist eine solche Maßnahme nur für kurze Zeit wirksam (US-A 2 745 886).

Es ist ebenso bekannt, die genannten Katalysatoren bei Temperaturen von 200 bis 500 °C mit elementarem Chlor zu behandeln, um einer Desaktivierung entgegenzuwirken (DE-C 1 194 826).

Es ist ferner bekannt, daß zur Regenerierung von Fluorierungskatalysatoren der Chromoxifluoridgruppe bei Temperaturen von 100–600 °C Fluorwasserstoff verwendet werden kann. Dieses Regenerierungsverfahren kann eine allmähliche Desaktivierung der Katalysatoren nicht verhindern (DE-C 1 767 200).

Aus der DE-A 2 702 360 ist es ferner bekannt, die genannten Katalysatoren mit elementarem Fluor zu behandeln, um eine Desaktivierung rückgängig zu machen.

Es ist auch bekannt, gebrauchten Chromoxifluorid-Katalysator durch Vermischen mit 10–50% frischem Kontaktmaterial zu regenerieren (JP-B 77 138 084). Von Nachteil ist, daß bei dieser Methode der Einsatz einer beträchtlichen Menge von aktivem Kontaktmaterial notwendig ist.

Die aufgezeigten Verfahren zur Regenerierung bzw. Reaktivierung der Fluorierungskatalysatoren aus der Gruppe der Chromoxifluoride lassen sich nicht beliebig oft wiederholen, so daß es nach einer mehr oder weniger langen Einsatzdauer, je nachdem welche halogenierten Kohlenwasserstoffe fluoriert werden, zu einem Desaktivierungsgrad der Katalysatoren kommt, wo es wirtschaftlich nicht mehr sinnvoll ist, die beschriebenen Maßnahmen zur Regenerierung bzw. Reaktivierung durchzuführen, und der geschädigte Katalysator durch frisches Material ersetzt werden muß. Aus diesem Grund fällt im Laufe der Zeit eine beträchtliche Menge an verbrauchtem inaktivem Chromoxifluoridkatalysator an, dessen Beseitigung oder Lagerung mit hohem wirtschaftlichem Aufwand verbunden ist.

Es stellte sich daher die Aufgabe, ein Verfahren zur Wiederaufbereitung von gebrauchten, mehr oder weniger stark desaktivierten Chromoxifluoridkatalysatoren zu finden.

Gegenstand der Erfindung ist ein Verfahren zur Wiederaufbereitung von gebrauchten, inaktiven Fluorierungskatalysatoren der Chromoxifluoridgruppe, im folgenden als Altkontakt bezeichnet, das dadurch gekennzeichnet ist, daß man die Katalysatoren in Gegenwart von Wasser mit Magnesiumoxid oder Magnesiumhydroxid vermischt, man – gegebenenfalls durch Eindampfen – die Mischung in einen Teig überführt und anschließend den Teig trocknet. Das eingesetzte Magnesiumoxid darf nicht geglüht sein, sondern muß noch mit schwach sauren Verbindungen reagieren können. Pro kg Altkontakt werden 0,001 bis 100 kg MgO, vorzugsweise 0,01–1 kg, oder 0,00145–145 kg $Mg(OH)_2$, vorzugsweise 0,0145–1,45 kg eingesetzt.

Die angewandte Wassermenge für die Wiederaufbereitung ist nicht kritisch; die Wassermenge soll jedoch ausreichen, damit die Masse zumindest durch einen Kneter verarbeitbar ist. Je höher die eingesetzte Wassermenge, um so mehr Wasser muß schließlich verdampft werden, um einen Teig zu erhalten.

Zur Wiederaufbereitung der verbrauchten Katalysatoren nach dem erfindungsgemäßen Verfahren kann man das Magnesiumoxid in trockener Form zu dem Altkontakt geben und die resultierende trockene Mischung mit Wasser anteigen und zu einer Paste verkneten.

Man kann auch den vorgelegten Altkontakt mit Wasser anteigen, das Magnesiumoxid trocken zugeben und den resultierenden Teig verkneten. Das Verkneten erfolgt vorteilhafterweise mit Maschinen, die in der Verfahrenstechnik üblicherweise zum Vermischen pastöser Stoffe dienen (z.B. Vertikal-Kneter oder Duplex-Kneter).

Zur Wiederaufbereitung nach dem erfindungsgemäßen Verfahren wird der Altkontakt vorzugsweise in Pulverform eingesetzt. Es ist ebenso möglich, den Altkontakt als Granulat einzusetzen.

Bei der Herstellung der erfindungsgemäßen Katalysatoren wird eine Paste erhalten, die ohne Waschen getrocknet wird. Sie ist direkt zur Herstellung von Formkörpern, wie Zylinder und Tabletten, geeignet. Von Vorteil ist es, daß die Formkörper mit den üblichen verfahrenstechnischen Maßnahmen, wie z.B. Pelletisieren, Extrudieren oder Granulieren, hergestellt werden können.

Die wiederaufbereiteten Katalysatoren sind geeignet zum Einsatz in Festbett-, Fließbett- und Wirbelschichtreaktoren.

Nach der Formgebung erfolgt die Trocknung der Kontaktförmlinge, die zu mechanisch stabilen Katalysatorkörpern führt. Die Trocknung kann sowohl bei Raumtemperatur als auch bei erhöhter Temperatur erfolgen.

Zweckmäßigerweise wird eine Trocknungstemperatur von 50 bis 150 °C, vorzugsweise 70 bis 120 °C gewählt, um die Trocknungszeit zu verkürzen. Die Trocknung kann sowohl unter Normaldruck als auch unter Vakuum erfolgen.

Vorteilhafterweise wird der Katalysator mit überschüssigem Fluorwasserstoff bei Temperaturen von 20–500 °C behandelt, bevor er wieder zum Einsatz kommt. Auf diese Weise wird überschüssiges MgO bzw. $Mg(OH)_2$ in $MgF_2$ umgewandelt. Ohne diese Behandlung erreicht der Katalysator seine maximale Aktivität erst während der ersten katalysierten Fluorierung in Gegenwart von HF.

Zweckmäßigerweise wird die Fluorwasserstoffbehandlung bei einer Temperatur durchgeführt, bei der flüchtige Reaktionsprodukte (HF, $H_2O$) nicht kondensieren. Vorteilhaft sind Temperaturen von 100–400 °C, vorzugsweise 120–220 °C. Die eingesetzte Menge Fluorwasserstoff ist nicht kritisch. Man erhält schon wirksame Katalysatoren, wenn man 0,2 bis 2 Mol Fluorwasserstoff pro Mol eingesetztem MgO bzw. $Mg(OH)_2$ einsetzt.

Die Fluorwasserstoffmenge ist nach oben unbeschränkt und nur durch wirtschaftliche Erwägungen begrenzt.

Die Fluorierungszeit kann in weiten Grenzen gewählt werden; bevorzugt sind 0,5 bis 10 Stunden. Um das entstehende Wasser schneller zu entfernen und unerwünschte Temperaturspitzen zu vermeiden, kann man HF durch ein Inertgas z. B. $N_2$ oder Luft) verdünnen.

Die nach dem erfindungsgemäßen Verfahren wiederaufbereiteten Katalysatoren zeigen überraschenderweise teilweise eine höhere Aktivität als frisch hergestellter Chromoxifluoridkatalysator.

Die wiederaufbereiteten Katalysatoren können unmittelbar zur Durchführung von Fluorierungs- und/ oder Dismutierungsreaktionen mit Halogenalkanen eingesetzt werden. Eine Aktivierung der Katalysatoren durch Kalzinieren ist nicht erforderlich.

Die Erfindung wird durch die Beispiele näher erläutert.

Beispiel 1

Ein Gewichtsteil des gebrauchten Chromoxifluoridkontaktes von Beispiel 10 wird mit einem Gewichtsteil Magnesiumoxid trocken vermischt, mit 4 Gewichtsteilen Wasser angeteigt und verknetet.

Anschließend wird das pastöse Produkt zu Würfelförmlingen (0,5 cm Kantenlänge) granuliert und 16 Stunden bei 100° C getrocknet.

0,33 l (Schüttvolumen) der getrockneten Kontaktkörper (115 g) werden in einem Rohr aus Nickel oder VA-Stahl mit 5 cm lichter Weite und 130 cm Länge bei 280 °C mit 211 g Fluorwasserstoff behandelt. Dabei wird HF mit $N_2$ verdünnt. Molverhältnis $HF/N_2 = 3,0$; 60 g HF/Stunde.

Beispiel 2

Zehn Gewichtsteile des gebrauchten Chromoxifluoridkontaktes werden mit einem Gewichtsteil Magnesiumoxid trocken vermischt, mit zehn Gewichtsteilen Wasser angeteigt und verknetet. Anschließend wird das pastöse Produkt zu Würfelförmlingen (0,5 cm Kantenlänge) granuliert und 16 Stunden bei 100 °C getrocknet.

0,33 l (Schüttvolumen) der getrockneten Kontaktkörper (210 g) werden in einem Rohr aus Nickel oder VA-Stahl mit 5 cm lichter Weite und 130 cm Länge bei 210 °C mit 120 g Fluorwasserstoff behandelt. Dabei wird HF mit $N_2$ verdünnt.

Beispiel 3

Dreißig Gewichtsteile des gebrauchten Chromoxifluoridkontaktes werden mit einem Gewichtsteil Magnesiumoxid trocken vermischt und mit dreißig Gewichtsteilen Wasser angeteigt und verknetet.

Anschließend wird das pastöse Reaktionsprodukt zu Würfelförmlingen (0,5 cm Kantenlänge) granuliert und 16 Stunden bei 100 °C getrocknet.

0,33 l (Schüttvolumen) der getrockneten Kontaktkörper (270 g) werden in einem Rohr aus Nickel oder VA-Stahl mit 5 cm lichter Weite und 130 cm Länge bei 240 °C mit 154 g Fluorwasserstoff behandelt. Dabei wird HF mit $N_2$ verdünnt.

Beispiel 4

Einhundert Gewichtsteile des gebrauchten Chromoxifluoridkontaktes werden mit einem Gewichtsteil Magnesiumoxid trocken vermischt, mit vierzig Gewichtsteilen Wasser angeteigt und verknetet.

Anschließend wird das pastöse Reaktionsprodukt zu Würfelförmlingen (0,5 cm Kantenlänge) granuliert und 16 Stunden bei 100 °C getrocknet.

0,33 l (Schüttvolumen) der getrockneten Kontaktkörper (237 g) werden in einem Rohr aus Nickel oder VA-Stahl mit 5 cm lichter Weite und 130 cm Länge bei 320 °C mit 246 g Fluorwasserstoff behandelt. Dabei wird HF mit $N_2$ verdünnt.

Beispiel 5

570 g Tetrachlorkohlenstoff und 120 g Fluorwasserstoff werden innerhalb von drei Stunden in gasförmigem Zustand über 0,33 l des nach Beispiel 1 wiederaufbereiteten Fluorierungskatalysators geleitet. der mittels eines elektrischen Widerstandes auf einer Temperatur von 200 °C gehalten wird.

Der Reaktor besteht aus dem gleichen Rohr, das schon zur Fluorwasserstoffbehandlung bei der Herstellung des Katalysators eingesetzt wurde. Die den Reaktor verlassenden gasförmigen Reaktionsprodukte werden einer mit Wasser gefüllten Waschvorlage zugeführt. in der die zu analysierenden Säuregemische aufgefangen werden.

Die Werte des Fluorwasserstoffumsatzes werden in den betreffenden Beispielen mittels Titration des Waschwassers bestimmt. Die erhaltenen Werte werden zusätzlich durch eine Fluorid-spezifische Elektrode potentiometrisch kontrolliert.

Der HF-Umsatz für den nach Beispiel 1 hergestellten Fluorierungskatalysator beträgt 99,5% bezogen auf die Menge des eingesetzten Fluorwasserstoffs.

Anschließend wurde ein Chlor-Fluor-Austauschtest bei 300 °C für drei Stunden durch Überleiten von 180 g HF und 285 g $CCl_4$ über diesen Katalysator durchgeführt. Aus der Titration der aufgefangenen HCl ergibt sich ein Chlor-Fluor-Austauschwert von 2.98. d.h. von 4 Chloratomen in $CCl_4$ werden statistisch gesehen 2,98 Chloratome gegen Fluoratome ausgetauscht.

Beispiel 6

Der nach Beispiel 2 wiederaufbereitete Katalysator (0.33 l Schüttvolumen) wird in derselben Versuchsanordnung gemäß Beispiel 5 zur Fluorierung von Tetrachlorkohlenstoff mit Fluorwasserstoff eingesetzt. Die Reaktionstemperatur beträgt 200 °C. Dabei beträgt der HF-Umsatz 99.3%. Der Chlor-Fluor-Austauschwert bei 300 °C beträgt. 2.71.

Beispiel 7

Der nach Beispiel 3 wiederaufbereitete Katalysa-

tor (0,33 l Schüttvolumen) wird in derselben Versuchsanordnung gemäß Beispiel 5 zur Fluorierung von Tetrachlorkohlenstoff mit Fluorwasserstoff eingesetzt.

Die Reaktortemperatur beträgt 200 °C. Dabei beträgt der HF-Umsatz 99,4%.

Der Chlor-Fluor-Austausch beträgt 2,79.

Beispiel 8

Der nach Beispiel 4 wiederaufbereitete Katalysator (0,33 l Schüttvolumen) wird in derselben Versuchsanordnung gemäß Beispiel 5 zur Fluorierung von Tetrachlorkohlenstoff mit Fluorwasserstoff eingesetzt. Die Reaktionstemperatur beträgt 200 °C. Dabei beträgt der HF-Umsatz 99,6%.

Der Chlor-Fluor-Austausch-Wert bei 300 °C beträgt 2,89.

Beispiel 9 (Vergleichsbeispiel)

Ein aus Chromoxidhydratgrün und HF gemäß Beispiel 2 der DE-B 1 252 182 hergestellter Chromoxifluoridkatalysator wird nach der Methode gemäß Beispiel 5 zur Fluorierung von Tetrachlorkohlenstoff mit Fluorwasserstoff eingesetzt.

Die Reaktionstemperatur beträgt 200 °C. Dabei beträgt der HF-Umsatz 99,6%.

Der Chlor-Fluor-Austauschwert bei 300 °C beträgt 2,81.

Beispiel 10 (Vergleichsbeispiel)

Ein gemäß Beispiel 9 hergestellter Chromoxifluoridkatalysator wurde in der großtechnischen Fluorkohlenwasserstoff-Produktion verwendet und dabei auch gemäß DBP 1194826 mit Chlor regeneriert. Er wurde nach 20 000 Stunden Einsatz wegen zu geringer Aktivität ausgeschleust und nach der Methode von Beispiel 5 zur Fluorierung von Tetrachlorkohlenstoff eingesetzt. Der Katalysator ist mit dem in Beispiel 1–4 eingesetzten gebrauchten Chromoxifluoridkontakt identisch.

Der HF-Umsatz bei 200 °C beträgt 22.5%.

Der Chlor-Fluor-Austausch bei 300 °C beträgt 2,45%.

## Patentansprüche

1. Verfahren zur Wiederaufbereitung von verbrauchten Fluorierungskatalysatoren der Chromoxifluoridgruppe, dadurch gekennzeichnet, daß man die Katalysatoren in Gegenwart von Wasser mit nicht zuvor geglühtem Magnesiumoxid oder Magnesiumhydroxid vermischt, man – gegebenenfalls durch Eindampfen – die Mischung in einen Teig überführt und den Teig trocknet.

2. Verfahren nach Anspruch 1, dadurch gekennzeichnet, daß der Teig verformt wird, bevor er getrocknet wird.

3. Verfahren nach Anspruch 1, dadurch gekennzeichnet, daß 0,001 bis 100 kg Magnesiumoxid oder 0,00145 bis 145 kg Magnesiumhydroxid pro kg des verbrauchten Katalysators eingesetzt werden.

4. Verfahren nach Anspruch 1, dadurch gekennzeichnet, daß man den getrockneten Teig bei Temperaturen von 20–500 °C mit überschüssigem Fluorwasserstoff behandelt.

## Claims

1. Process for the regeneration of spent fluorination catalysts of the chromium oxyfluoride group, wherein the catalysts are mixed with magnesium oxide which has not previously been calcined or magnesium hydroxide in the presence of water, the mixture is converted into a paste (if necessary by evaporation) and the paste dried.

2. Process as claimed in claim 1, wherein the paste is shaped before it is dried.

3. Process as claimed in claim 1, wherein 0.001 to 100 kg magnesium oxide or 0.00145 to 145 kg magnesium hydroxide is used per kg of spent catalyst.

4. Process as claimed in claim 1, wherein the dried paste is treated with excess hydrofluoric acid at temperatures of 20–500 °C.

## Revendications

1. Procédé de régénération de catalyseurs de fluoration usagés du groupe des oxyfluorures de chrome, procédé caractérisé en ce que l'on mélange les catalyseurs en présence d'eau avec de l'hydroxyde de magnésium ou avec de l'oxyde de magnésium non-calciné au préalable, et du mélange on fait une pâte, éventuellement en l'évaporant, pâte que l'on sèche.

2. Procédé selon la revendication 1 caractérisé en ce que l'on moule la pâte avant de la sécher.

3. Procédé selon la revendication 1 caractérisé en ce que l'on ajoute de 0,001 à 100 kg d'oxyde de magnésium ou bien de 0,00145 à 145 kg d'hydroxyde de magnésium par kg du catalyseur usagé.

4. Procédé selon la revendication 1 caractérisé en ce que l'on traite la pâte séchée avec un excès de fluorure d'hydrogène à une température pouvant être comprise entre 20 et 500 °C.